# EUROPÄISCHE PATENTANMELDUNG

(11) **EP 1 672 577 A1**
(43) Veröffentlichungstag der Anmeldung: **21.06.2006**
(21) Anmeldenummer: 05112212.5
(22) Anmeldetag: 15.12.2005
(51) Int. Cl.: G06Q 10/00

(54) **Verfahren und Vorrichtung zum Erstellen eines Pauschalreise-Datensatzes**

(30) Priorität: 16.12.2004 DE 102004061163; 11.03.2005 DE 102005011674; 14.06.2005 DE 102005027574
(71) Anmelder: Travel Tainment AG, 52080 Aachen (DE)
(72) Erfinder: Szlachcic, Jaroslaw, 52080, Aachen (DE); Pfau, Markus, 52080, Aachen (DE); Usbeck, Ralf, 52080, Aachen (DE)
(74) Vertreter: Weisse, Renate

(57) **Zusammenfassung**

Ein Verfahren zum Erstellen eines Pauschalreise-Datensatzes für eine verfügbare Pauschalreise auf der Basis von Rohdaten unterschiedlichen Formats und unterschiedlicher Gültigkeitszeiträume, ist gekennzeichnet durch die Schritte: Erstellen einer ersten Datenbank, in welcher eine Vielzahl von einer Unterkunft zugeordneten Datensätzen enthalten sind und jeder der Datensätze den zu Anreisetag und Reisedauer gehörigen Grundpreis für diese Unterkunft enthält und einen Wiederverkäuferspezifischen Zeiger, Erstellen einer zweiten Datenbank, in welcher die zu den Anreisetagen und Anreisedauern gehörigen Flugpreise verfügbarer Flüge enthalten sind, Erstellen einer dritten Datenbank, in welcher Formeln zur Ermittlung eines Endpreises enthalten sind, wobei der Zeiger in dem Datensatz aus der ersten Datenbank auf eine Formel oder ein Formelpaket zeigt, welche zur Erstellung des Endpreises anzuwenden sind, Abfragen von Auswahlkriterien, Kombinieren von Anreisedatum und Reisedauern für Hotels aus der ersten Datenbank und Flüge aus der zweiten Datenbank zu verfügbaren Pauschalreisen unter Berücksichtigung der Auswahlkriterien, Erstellen eines Endpreises für die so ermittelten Pauschalreisen aus den in der ersten Datenbank enthaltenen Hotelpreisen und den in der zweiten Datenbank enthaltenen Flugpreisen unter Anwendung der in der dritten Datenbank enthaltenen Formeln.

## Beschreibung

### Technisches Gebiet

Die Erfindung betrifft ein Verfahren und eine Vorrichtung zum Erstellen eines Pauschalreise-Datensatzes für eine verfügbare Pauschalreise auf der Basis von Rohdaten unterschiedlichen Formats und unterschiedlicher Gültigkeitszeiträume.

Ein Pauschalreise-Datensatz umfasst üblicherweise Angaben über eine Unterkunft, zum Beispiel ein Hotel oder eine Ferienwohnung und die zugehörige Flugverbindung. Weiterhin umfasst der Datensatz Informationen zum Anreisedatum und zur Reisedauer.

### Stand der Technik

Pauschalreisen werden vor Beginn einer Saison zusammengestellt. Zu diesem Zweck werden Flüge und Hotels bzw. sonstige Unterkünfte von den jeweiligen Veranstaltern eingekauft. Jeder Unterkunft werden für verschiedene Anreisetage und Reisedauern Flüge zugeordnet. Die Pauschalreise wird dann ggf. um weitere Zusatzleistungen, sog. Add-Ons ergänzt. Solche Zusatzleistungen können der Transfer vom Flughafen zur Unterkunft, Begrüßungscocktails, Eintrittskarten oder dergleichen sein. Für die Kombination aller Leistungen wird der Reisepreis berechnet und anschließend wird die Pauschalreise im Katalog angeboten. Zur Berechnung des Reisepreises werden unter anderem Rabatte berücksichtigt, die für bestimmte Anreisetage gültig sind. Weiterhin werden verschiedene Provisionen berücksichtigt.

Während der Buchungsphase können sich aufgrund des Nachfrageverhaltens Preisänderungen ergeben. Dann werden weitere Reisen in Form von Last-Minute-Angeboten zusammengestellt, die zwar nicht im Katalog angeboten werden, aber zum Beispiel im Internet oder über die Reisebüros buchbar sind. Wenn die Reise einmal zusammengestellt ist, und der Preis berechnet ist, werden üblicherweise keine Preisänderungen mehr vorgenommen.

Nachteilig bei dieser Vorgehensweise ist es, daß die Reisen bereits vor der Buchungsphase zusammengestellt werden müssen. Der Anbieter der Reise muß bei der Zusammenstellung möglichst gute Prognosen bezüglich des Reiseverhaltens in der nächsten Saison treffen. Weiterhin muß der Anbieter aufgrund der Vielzahl möglicher Kombinationen eine sehr große Anzahl von Datensätzen vorhalten. Dabei wird sehr viel Speicherplatz benötigt. Die Suche nach einem geeigneten Datensatz braucht entsprechend mehr Zeit.

Bei der Online-Buchung von Reisen z.B. im Internet ist die Geschwindigkeit, mit der ein Treffer für bestimmte Auswahlkriterien erzielt wird, für die Anzahl der gebuchten Reisen wichtig. Es besteht daher ein großes Interesse, die Suche zu verkürzen. Es ist wünschenswert, möglichst viele der verfügbaren Flug-Hotel-Kombinationen anzubieten. Es ist jedoch nicht praktikabel, alle Kombinationen zu erstellen und anzubieten, da diese mehr als 100 Millionen Datensätze umfassen würden. Die Suche in einer so großen Datenbank würde auch bei leistungsfähigen Rechnern zu lange dauern.

Im Gegensatz zu bekannten, vergleichbar großen Datenbanken, wie sie etwa in Bibliotheken vorliegen, stammen die Daten zur Zusammenstellung von Pauschalreise-Arrangements aus unterschiedlichen Quellen. Weiterhin haben die Daten unterschiedliche Formate und unterschiedliche Inhalte, die zunächst zusammengestellt werden müssen. Die Flüge werden von Fluggesellschaften angeboten. Die Hotels werden von den Veranstaltern angeboten. Die Rabatte werden von den Wiederverkäufern vorgegeben. Je nach Gültigkeitszeitraum werden unterschiedliche Rabatte vorgegeben. Verschiedene Wiederverkäufer bieten verschiedene Add-Ons zu verschiedenen Zeiträumen an. Die Datenmengen müssen zunächst sinnvoll kombiniert werden, bevor sie ausgegeben werden können.

### Offenbarung der Erfindung

Es ist Aufgabe der Erfindung ein Verfahren und eine Vorrichtung der eingangs genannten Art zu schaffen, bei welchen eine große Vielzahl an Pauschalreisen, die vorgegebenen Auswahlkriterien entsprechen, in möglichst kurzer Zeit zusammengestellt werden können und es möglich ist, Preisänderungen leichter zu berücksichtigen.

Erfindungsgemäß wird die Aufgabe durch ein Verfahren gelöst, mit den Schritten:
(a) Erstellen einer ersten Datenbank, in welcher eine Vielzahl von einer Unterkunft zugeordneten Datensätzen enthalten sind und jeder der Datensätze den zu Anreisetag und Reisedauer gehörigen Grundpreis für diese Unterkunft enthält und einen Wiederverkäufer-spezifischen Zeiger,
(b) Erstellen einer zweiten Datenbank, in welcher die zu den Anreisetagen und Anreisedauern gehörigen Flugpreise verfügbarer Flüge enthalten sind,
(c) Erstellen einer dritten Datenbank, in welcher Formeln zur Ermittlung eines Endpreises enthalten sind, wobei der Zeiger in dem Datensatz aus der ersten Datenbank auf eine Formel oder ein Formelpaket zeigt, welche zur Erstellung des Endpreises anzuwenden sind,
(d) Abfragen von Auswahlkriterien,
(e) Kombinieren von Anreisedatum und Reisedauern für Hotels aus der ersten Datenbank und Flüge aus der zweiten Datenbank zu verfügbaren Pauschalreisen unter Berücksichtigung der Auswahlkriterien,
(f) Erstellen eines Endpreises für die so ermittelten Pauschalreisen aus den in der ersten Datenbank enthaltenen Hotelpreisen und den in der zweiten Datenbank enthaltenen Flugpreisen unter Anwendung der in der dritten Datenbank enthaltenen Formeln.

Bei diesem Verfahren werden die von den Veranstaltern bereitgestellten Daten in gemeinsamen Datenbanken gespeichert. Jede Unterkunft wird in einem eigenen Datensatz in einer Datenbank berücksichtigt. Die Flüge sind in einer weiteren Datenbank berücksichtigt. In einer dritten Datenbank werden die Formeln gespeichert, nach denen sich der Preis berechnet. Durch einen Zeiger werden die Formeln mit der Unterkunft verknüpft. Es muß also nicht die gesamte dritte Datenbank daraufhin überprüft werden, ob die Formel anzuwenden ist oder nicht. Vielmehr wird nur ein Formelpaktet, auf das der Zeiger zeigt, angewendet.

Die Datenbanken können regelmäßig aktualisiert werden, so daß Preisänderungen und Änderungen bei der Verfügbarkeit jederzeit berücksichtigt werden können. Der Endpreis wird nicht vor der Saison, sondern erst zum Zeitpunkt der Abfrage ermittelt. Damit ist die Preiskalkulation mit erheblich geringerem wirtschaftlichen Risiko behaftet.

Es werden mehrere Datenbanken verwendet, aus denen erst nach Vorliegen der Auswahlkriterien, wie Anreisetag und Reisedauer, Pauschalreise-Datensätze erstellt werden. Dadurch wird es möglich, alle denkbaren Kombinationen anzubieten. Der benötigte Speicher ist jedoch vergleichsweise gering.

Die Erfindung basiert auf der Erkenntnis, daß nur durch die Verwendung von drei Datenbanken und die Verknüpfung über einen Zeiger alle verfügbaren Kombinationen für Pauschalreisen bei ausreichend kurzer Suchdauer angeboten werden können. Dadurch wird es möglich, Pauschalreisen während der Abfrage zusammenzustellen.

Im Gegensatz zu den Datenbanksystemen von z.B. Banken können die Daten hier so aufbereitet werden, daß die Bearbeitungsgeschwindigkeit während der Abfrage minimal wird.

Durch die Verwendung eines Zeigers in der ersten Datenbank für die Unterkunft wird die Suchdauer wesentlich verkürzt. Es brauchen nicht alle Formeln in der dritten Datenbank für die Formeln abgearbeitet werden, sondern nur diejenigen, auf die der Zeiger gerichtet ist. Diese Formeln sind dann aber auch tatsächlich anwendbar.

Es versteht sich, dass statt des tatsächlichen Grundpreises in einer Währung auch ein anderer Wert in der ersten und zweiten Datenbank angegeben sein kann, der diesen Grundpreis repräsentiert.

Vorzugsweise sind die Datensätze der ersten Datenbank Matrizen mit Zeilen und Spalten. Jede der Matrizen ist einer Unterkunft zugeordnet. Der Eintrag in jedem Feld der Matrix stellt den Grundpreis dar, der dem einer Spalte zugeordneten Anreisetag und der einer Zeile zugeordneten Reisedauer entspricht, wobei jede Matrix ferner mit einem Header versehen ist, in dem eine Unterkunftsidentifikation und der Wiederverkäufer-spezifische Zeiger enthalten ist. Dieser Zeiger repräsentiert die Adresse, an welcher das Formelpaket für diesen Wiederverkäufer steht. Durch den Weg, über den die Buchung zustande kommt, z.B. durch die Verwendung eines bestimmten Internet-Portals oder Reisebüros, ist der Wiederverkäufer bereits bekannt. Es wird also der Zeiger ausgewählt, der an der Stelle für diesen Wiederverkäufer steht, ohne daß die übrigen Zeiger gelesen oder verarbeitet werden müssen.

Die zweite Datenbank ist eine Mehrzahl von Matrizen mit Zeilen und Spalten. Für jede Flugverbindung wird eine eigene Matrix erstellt. Auch hier stellt der Eintrag in jedem Feld der Matrix den Grundpreis dar, der dem einer Spalte zugeordneten Anreisetag und der einer Zeile zugeordneten Reisedauer entspricht. Die Unterkunftsmatrizen und die Flugmatrix haben also das gleiche Format. Jede n-te Spalte und m-te Zeile entspricht jeweils der n-ten Spalte und m-ten Zeile in den Matrizen der ersten Datenbank. Die Preise sind jeweils die für diese Verbindung günstigsten Preise, auch wenn es mehrere Anbieter gibt.

Selbstverständlich können die Matrizen auch mit vertauschten Spalten und Zeilen verwendet werden. Dann ist der Spalte die Reisedauer und der Zeile ein Anreisetag zugeordnet.

Bei einer derartigen Ausgestaltung der Datenbanken kann die Kombination der Werte für Unterkünfte und Flüge durch Addieren der Grundpreise in den Feldern mit gleichen Koordinaten erfolgen. Dabei werden solche Koordinaten berücksichtigt, die den Auswahlkriterien entsprechen. Im Header der Unterkunftsmatrix ist bereits ein Zeiger zur Flugmatrix vorgesehen, die zu verwenden ist. In der Flugmatrix sind dann die Preise des Anbieters mit dem niedrigsten Preis enthalten. Das hat den Vorteil, daß nur ein kleiner Ausschnitt aus den verschiedenen Datenbanken gelesen werden muß. Die günstigste Hotel-Flugkombination wird ohne weitere Vergleiche ausgewählt. Dadurch wird sehr viel schneller ein Suchergebnis erzielt.

In einer besonders bevorzugten Ausgestaltung der Erfindung berücksichtigen die in der ersten und/oder zweiten Datenbank aufgeführten Grundpreise alle Formeln, die für alle angebotenen Reisen gleich sind. Dadurch kann die Anzahl der Formeln, die abgearbeitet werden müssen, reduziert werden. Eine Flughafengebühr ist zum Beispiel unabhängig vom Wiederverkäufer und unabhängig vom Gültigkeitszeitraum immer mit dem gleichen Betrag zu berücksichtigen. Eine solche Gebühr kann entsprechend bereits zum Grundpreis addiert werden ohne daß eine eigene Formel verwendet wird. Auch Rabatte, die der Veranstalter unabhängig vom Wiederverkäufer einräumt, können an dieser Stelle bereits berücksichtigt werden.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: veranschaulicht den Aufbau der Datenverwaltung für die Zusammenstellung von Pauschalreisen
- Fig.2: ist eine schematische Darstellung einer Matrix mit Daten für eine Unterkunft
- Fig.3: veranschaulicht das Verfahren zur Erzeugung eines gültigen Pauschalreiseangebots
- Fig.4: veranschaulicht das Verfahren zur Berechnung des Endpreises für ein Pauschalreiseangebot nach Fig.3
- Fig.5: ist eine schematische Darstellung der einzelnen Verfahrensschritte, die für die Ausgabe eines Pauschalangebots erforderlich sind.
- Fig.6: zeigt einen beispielhaften Ausschnitt aus einer Matrix mit Grundpreisen für Unterkünfte
- Fig.7: zeigt einen beispielhaften Ausschnitt aus einer Datenbank mit Formeln auf welche einer Zeiger in der Matrix aus Fig.6 zeigt.
- Fig.8: zeigt beispielhaft einen Ausschnitt aus einer Flugmatrix

### Beschreibung des Ausführungsbeispiels

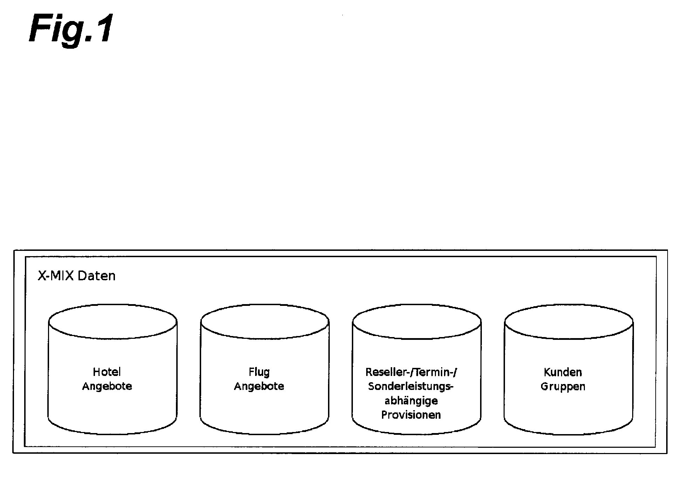

Im vorliegenden Ausführungsbeispiel werden die Hotelangebote bzw. sonstige Unterkünfte von den Veranstaltern über eine Schnittstelle in einem Rechner aufgenommen. Ebenso werden die Flugangebote von den Fluggesellschaften über eine Schnittstelle aufgenommen. Über eine weitere Schnittstelle können Provisionen, Sonderleistungen und andere Besonderheiten eingegeben werden. Dies ist in Fig. 1 dargestellt.

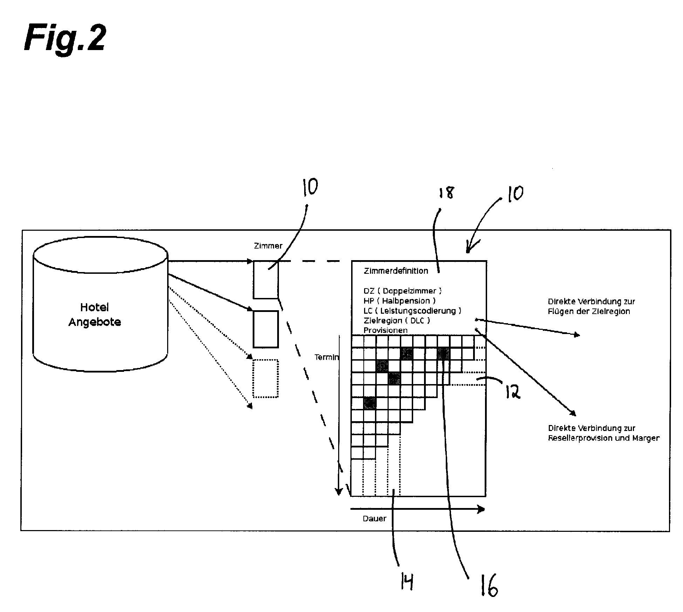

Die Hotelangebote werden formatiert und gespeichert. Dieser Vorgang ist in Fig. 2 illustriert. Jedes Hotel wird zunächst mit einem Hotelindex bezeichnet, wenn die Daten nicht bereits mit dem Index versehen sind. Der Index ist z.B. ein dreistelliger Index. Für jedes Hotel wird eine Matrix 10 erstellt. Ein Beispiel für eine solche Matrix ist in Fig. 2 dargestellt. Die Matrix 10 besteht aus Zeilen 12 und Spalten 14. Jede Spalte entspricht einer Reisedauer. Jede Zeile entspricht einem Anreisetag. In den Feldern 16 der Matrix sind Grundpreise angegeben. Der Grundpreis berücksichtigt den Preis für diese Unterkunft für die zugehörige Dauer und den zugehörigen Anreisetag. Der Grundpreis wird als Zahl angegeben, die den Preis in einer üblichen Währung, z.B. Euro repräsentiert.

Die Matrix 10 ist ferner mit einem Header 18 versehen. In dem Header stehen neben dem Hotelindex Angaben zur Zimmerart, zur Verpflegungsart und zur Zielregion. Die Informationen liegen in binärer Form vor. Die Angaben sind auf übliche Weise codiert. Die Zimmerart "DZ" repräsentiert zum Beispiel ein Doppelzimmer. "HP" ist die Verpflegungsart Halbpension etc. Für die Zielregion werden die üblichen Abkürzungen für den Zielflughafen verwendet. Ein typischer Header ist zum Beispiel:
IFF 162
Veranstalter VTO
Leistungscode PMI3144;;;4;;0
Zielflughafen 51348634
Zimmercode VTO;1;
ZimmerLong Einzelzimmer
Verpflegung HP
MinBelegung 1
MaxBelegung 1
ErwMin 1
ErwMax 1
Kinder_Alter_min 0
Kinder_Alter_max 0
TerminMin 0
TerminMax 143
Transfer1 156.80
Transfer2 78.40
Transfer3 52.27
Transfer4 39.20
Transfer5 31.36
Transfer6 26.13
Transfer7 22.40
Transfer8 19.60
Handling 0.00
TransferTR
PreisObjektPers
KundenGruppe 16777216
ResellerCount 45
(Kunde) 0(Offset) 228
(Kunde) 1 (Offset) 248
(Kunde) 2(Offset) 268
(Kunde) 3(Offset) 288
(Kunde) 4(Offset) 308
(Kunde) 5(Offset) 328
(Kunde) 6(Offset) 348
(Kunde) 7(Offset) 368
(Kunde) 8(Offset) 388
(Kunde) 9(Offset) 408
(Kunde) 10(Offset) 428
(Kunde) 11 (Offset) 448

"IFF 162" bezeichnet ein Hotel entsprechend dem von der Firma IFF erzeugten Hotelindex. "Leistungscode PMI3144;;;4;;0" ist eine Leistungscodierung. "Zielflughafen 51348634" ist ein Zeiger. Der Zeiger zeigt auf die Flugmatrix, die zu der Flugverbindung z.B. nach PMI gehört. "ZimmerLong Einzelzimmer" bezeichnet den Zimmernamen, der zu der Zimmercodierung "VTO;1;" gehört. "HP" ist die Abkürzung für die Verpflegungsart Halbpension. Unter MinBelegung und MaxBelegung sind die minimale und die maximale Belegungsart angegeben. Entsprechend ist die minimale und maximale Belegung mit Erwachsenen und für Kinder (Alter) angegeben.

Die Abreisetermine sind indiziert. So wird weder im Header noch in der Matrix ein Datum angegeben, sondern eine Zahl, die einem Datum zugeordnet ist. TerminMin 0 ist der Tag der Erstellung der Daten. TerminMax 143 bedeutet, daß alle Termine von bis Saisonende (entsprechend Termin 143) buchbar sind.

Anschließend sind Angaben zu Transferpreisen enthalten. Die Transferpreise sind für alle Veranstalter und Wiederverkäufer gleich. Sie können daher bereits in der Hotelmatrix angegeben werden. Bei unterschiedlicher Belegungszahl variieren die Transferpreise jedoch. Entsprechend wird der Transferpreis für eine Person, Transfer1, mit 156,80 Euro angegeben, für zwei Personen (Transfer2) mit 78,40 Euro usw. Für allgemeines Handling besteht die Möglichkeit einen Handling-Aufschlag zu berechnen. Im vorliegenden Beispiel ist er 0,00 Euro. Unter TransferTR und PreisObjektPers sind Kenner angegeben, die angeben, ob der Transfer pro Tag oder pro Reise und ob er pro Person oder pro Gruppe gilt. Unter Kundengruppe 16777216 wird die Zugehörigkeit des Wiederverkäufers zu einer Kundengruppe definiert. Die Anzahl der Wiederverkäufer wird unter "ResellerCount 12" angegeben. Im vorliegenden Beispiel liegen 45 Wiederverkäufer vor.

Für jeden der Wiederverkäufer ist ein Zeiger vorgesehen, der den Offset im für ihn vorgesehenen Formelpaket angibt. Im vorliegenden Fall werden 12 Zeiger vorgesehen. Der erste Zeiger für den mit "0" bezeichneten Wiederverkäufer (=Kunde) ist 228. Der zweite Zeiger für den mit "1" bezeichneten Wiederverkäufer ist 248 usw. Auf die Zeiger wird nachstehend detailiert eingegangen.

Die Flugangebote werden gleichermaßen formatiert. Für jede Flugverbindung wird eine Matrix erstellt, in der die Preise für verschiedene Anreisetage und Reisedauern angegeben sind. Die Flugmatrix hat also das gleiche Format, wie die Hotelmatrix.

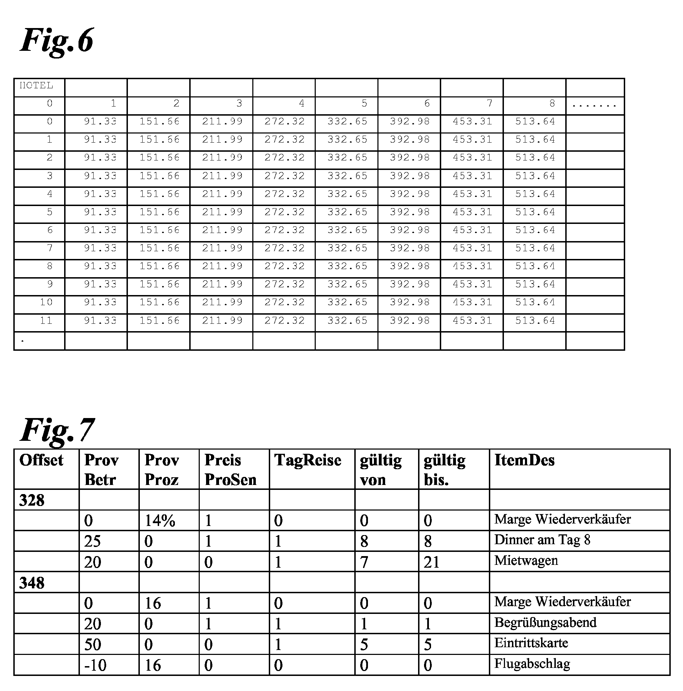

Schließlich wird eine Datenbank angelegt, in der die Formeln abgelegt werden, nach denen die Preisberechnung erfolgt. Die Formeln sind paketweise abgelegt. Ein Ausschnitt einer solchen Datenbank ist in Fig.7 dargestellt.

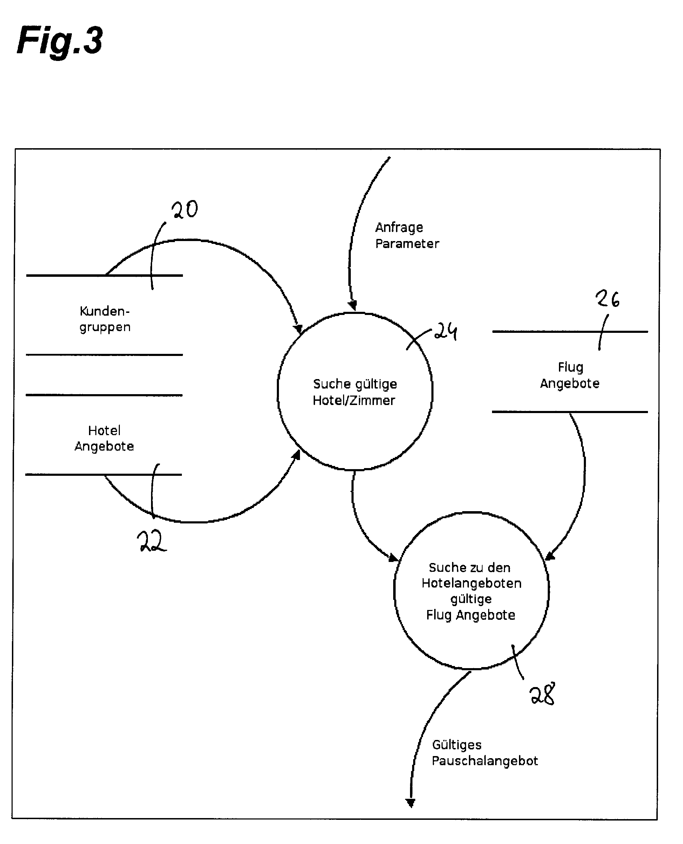

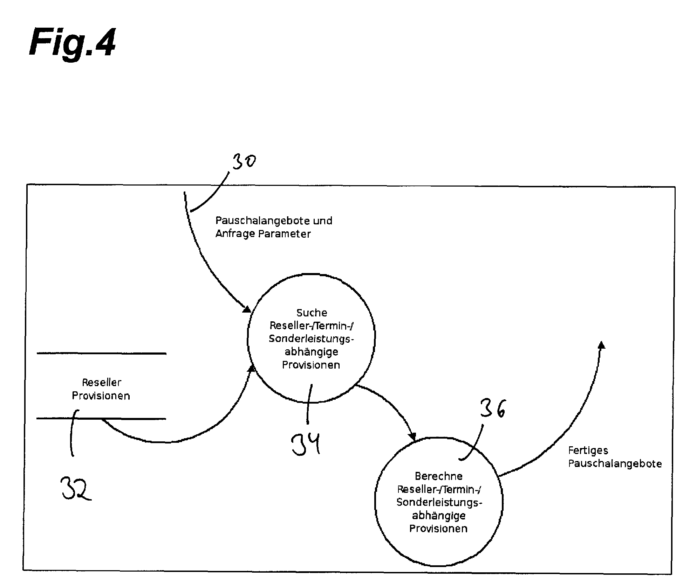

In Fig.3 ist schematisch dargestellt, wie nun eine Pauschalreise erstellt wird: Aus Kundengruppen 20 und Hotelangeboten 22 werden unter Berücksichtigung von Anfrageparametern gültige Hotels 24 ermittelt. Zusammen mit den Flugangeboten 26 werden dann gültige Pauschalangebote 28 erstellt. In einem zweiten Schritt wird dann der Preis ermittelt. Dies ist in Fig.4 dargestellt. Für gültige Pauschalangebote 30 und Provisionen 32 der Wiederverkäufer werden die Provisionen der Wiederverkäufer und Termin- und Sonderleistungsabhängige Provisionen 34 gesucht und berechnet 36. Am Ende ergibt sich das fertige Pauschalangebot.

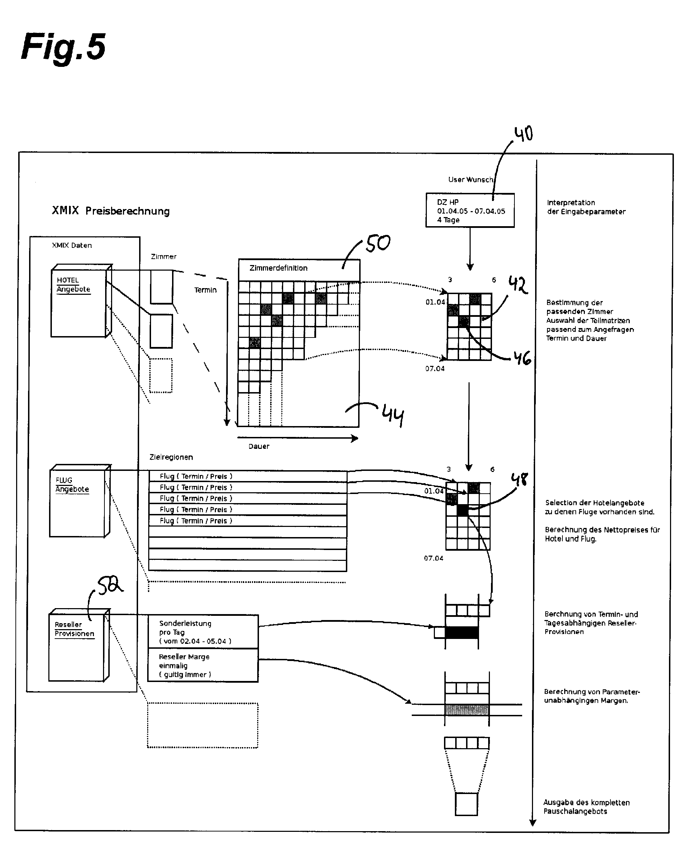

Die genaue Vorgehensweise ist in Fig.5 dargestellt. Über eine Eingabemaske, die zum Beispiel über das Internet aufrufbar ist, gibt der Reisende die Auswahlkriterien für seine Reise ein. Dazu zählen insbesondere die Reisedauer und mögliche Anreisetage. Es ist ferner möglich Auswahlkriterien wie Zielregion, Verpflegungsart etc. einzugeben. Die Auswahlkriterien sind in Fig. 5 mit 40 bezeichnet. Die möglichen Auswahlkriterien entsprechen den Angaben, die im Header der Unterkunftsmatrix vorgesehen sind, sowie dem Anreisedatum und der Reisedauer. Weiterhin kann ein Maximalpreis vorgegeben werden.

Die Hotelauswahl erfolgt nun in der Weise, daß die Header der Hotelmatrizen durchsucht werden. Für Hotels, die den Auswahlkriterien entsprechen, wird der Ausschnitt 42 aus der Matrix 44 übernommen, welcher der Reisedauer und den möglichen Anreisetagen entspricht. Im vorliegenden Fall liegen drei Angebote vor, die den Auswahlkriterien entsprechen. Diese Angebote sind schattiert 46 dargestellt.

Nun wird die Flugmatrix für die Zielregion des ausgewählten Hotels durchsucht. Die Suche beschränkt sich auf den Teil der Matrix, der die gleichen Koordinaaten hat, wie die Hotelmatrix. Berücksichtigt werden die Flüge, die den gültigen Hotels 46 entsprechen. Im vorliegenden Beispiel in Fig.5 wurde ein Flug 48 für ein Hotel gefunden.

Die Werte in den beiden Feldern 46 und 48 werden zu einem Nettopreis addiert. Anschließend wird der Preis des kompletten Pauschalangebots berechnet. Zu diesem Zweck wird der im Header 50 aus der Matrix 44 gelesen. Je nach Wiederverkäufer wird ein Wiederverkäufer-spezifischer Zeiger ermittelt. Über den Zeiger wird die Adresse angegeben, an dem das für diesen Wiederverkäufer gültige Formelpaket in der Formel-Datenbank 52 steht. Wenn keine Sonderleistung vorgesehen ist, haben alle Wiederverkäufer den gleichen Zeiger.

Die Formeln sind zeilenweise in der Datenbank 52 angegeben. Durch die Verwendung des Zeigers wird nun nicht die gesamte Datenbank 52 durchsucht. Es werden direkt die gültigen Formeln angewendet. Der Endpreis wird nun berechnet, indem die Formeln einzeln abgearbeitet werden.

Ein Beispiel für eine Formel ist die Addition von Absolutwerten (fixe Aufschläge) für bestimmte Sonderleistungen, etwa Mietwagen, Begrüßungsveranstaltung, ein Festessen an einem Feiertag, Eintrittskarten, oder dergleichen. Solche Sonderleistungen sind einmalig. Entsprechend wird der Absolutwert nur einmal addiert. Neben diesen reisebezogenen Aufpreisen gibt es auch tagesbezogene Aufpreise. Diese werden in der Form berechnet, daß der Preis zunächst mit der Reisedauer in Tagen multipliziert und anschließend zum Grundpreis addiert wird.

Weitere Beispiele für Formeln sind die Berücksichtigung der Provisionen. Neben der Veranstalterprovision ist gewöhnlich auch eine Provision für den Wiederverkäufer zu berücksichtigen. Beide Provisionen können als prozentuale Aufschläge berücksichtigt werden, indem die Anteile aufaddiert und dann als Faktor berücksichtigt werden. Auf gleiche Weise können prozentuale Abschläge in die Formel eingearbeitet werden.

Anhand von Fig. 6 und 7 wird die Berechnung in einem einfachen Beispiel illustriert. Es sei angenommen, daß der Wiederverkäufer, dem die Identifikationsnummer 5 zugeordnet wird, ein Portal im Internet anbietet, über welches ein Reisender seine Auswahl trifft. In einer Eingabemaske gibt der Reisende seinen Reisewunsch, zum Beispiel: 5 Tage, Abreise am 15.Juni.2005, nach Palma de Mallorca. ein. Ein Hotel, z.B. mit dem oben beispielhaft gezeigten Header, entspricht diesen Kriterien. Für dieses Hotel ist in Fig.6 eine Matrix mit Preisen gezeigt.

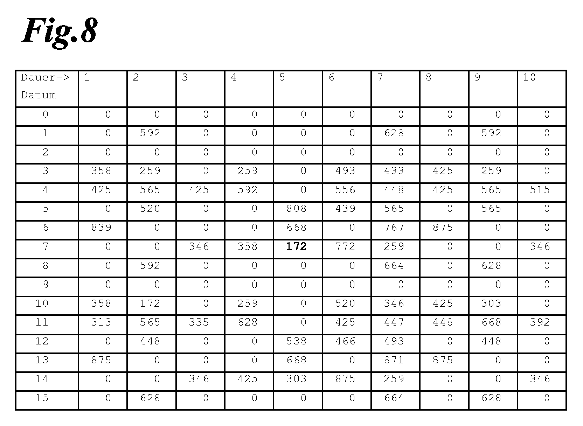

Der Abreisetermin entspricht dem Index 7, d.h. der siebten Zeile. Die Reisedauer von 5 Tagen ist in der fünften Spalte angegeben. Die Tabelle liefert also eine Verfügbarkeit zum Preis von 332,65 Euro. In der im Header angegebenen, zugehörigen Flugmatrix mit der Adresse 51348634 ist in Fig. 8 dargestellt. Für diese Datum wird ein Flug zum Preis von 172 Euro ermittelt.

Aus dem Hotelheader (s.o.) wird der Transferpreis für eine Person ermittelt. Dieser beträgt 156,80 Euro. Die Summe Hotel+Flug+Transfer, d.h. der Nettogrundpreis ist also 661,45 Euro.

Der Zeiger für den Wiederverkäufer mit ID 5 ist im Header der Unterkunftsmatrix angegeben. In der in Fig. 7 dargestellten Formel-Datenbank sind unter dem Offset 328 Formeln aufgeführt, die nun anzuwenden sind.

Dabei wird zunächst die Schnittmenge des Gültigkeitszeitraums mit dem Reisezeitraum gebildet. Der Endkundenpreis wird aus dem Nettogrundpreis, im vorliegenden Beispiel 661,45 Euro, berechnet. Nach der ersten Formel wird die Marge für den Wiederverkäufer hinzugerechnet. Diese ist mit 14% angegeben. Das ergibt sich aus der dritten Spalte "ProvProz". Sie gilt für den kompletten Zeitraum, wie sich aus "gültig von" und "gültig bis" ergibt. Die Marge wird pro Person berechnet. Dies ergibt sich aus "PreisProSen"=1. Weiterhin ist angegeben, ob der Wert pro Tag oder pro Reise hinzuzuaddieren ist. Aus "TagReise" = 0 ergibt sich, daß der Wert für die Reise gilt.

Die zweite Formel, die anschließend anzuwenden ist, betrifft eine Sonderleistung. Am 8.Tag der Reise ist ein Dinner vorgesehen. Dieses kostet 25 Euro pro Person und pro Tag. Anzuwenden ist es lediglich am 8.Tag. Es ist also lediglich einmal 25 Euro hinzuzuaddieren.

Die dritte Formel betrifft eine ebenfalls eine Sonderleistung. Diese ist mit einem Festbetrag für den Betreiber "Prov Betr" in Höhe von 20 Euro vorgesehen. Der Gültigkeitszeitraum ist von 7. bis zum 20. Tag und für jeden Tag des Gültigkeitszeitraums ist der Wert hinzuzuaddieren. Der Preis gilt jedoch nicht pro Person, sondern nur einmal pro Reise.

Zunächst werden die festen Aufschläge addiert und anschließend die Summe der Prozentualen Aufschläge berücksichtigt. Die Vorgehensweise ist im Struktogramm in Fig. 8 noch einmal zusammengefasst.

Zum Nettogrundpreis sind einmalig 25 Euro nach Formel 2 zu addieren, wodurch sich 661,45 + 1*25 = 686,45 Euro ergibt. Weiterhin sind für den Mietwagen nach Formel 3 20 Euro pro Tag hinzuzuaddieren. Bei 5 Tagen Reisedauer ergibt sich ein Preis von 686,45+(20*5)/1=786,45 Euro.

Anschließend an die fixen Aufschläge werden die Provisionen hinzugerechnet. Der Veranstalter berechnet eine Provision von 14%. Entsprechend ergibt sich 786,45 *1,14= 896,55 Euro. Das ist ein noch nicht gerundeter Endpreis. Für jeden Wiederverkäufer ist eine Rundungstabelle hinterlegt, in der jedem Wert ein Endpreis zugeordnet wird. So wird der vorliegende Preis zum Beispiel auf 899 Euro gerundet. Der Reisende, der die Reise im Internet buchen möchte, bekommt die Reise also zu einem Preis von 899 Euro angeboten. Je nach Belegung wird dann der Preis für mehrere Personen ermittelt.

Die Hotels und sonstigen Unterkünfte, für welche verfügbare Pauschalreisen zusammengestellt werden können und die den Auswahlkriterien entsprechen, werden nun in einer Liste ausgegeben. Die Liste kann nach dem Preis, oder dem Grad der Entsprechung der Auswahlkriterien oder dergleichen sortiert werden. Der Reisende kann dann mehr Reisedetails, z.B. über das Hotel aus einer Datenbank abrufen und eine der Reisen buchen. Durch die besondere Ablage der Daten und die beschriebene Verarbeitungsstrategie wird das Suchergebnis in Zeiten unterhalb von 30 ms erzielt. Damit wird eine schnelle Fenstertechnologie verwirklicht. Die Endpreise sind individuell an den jeweiligen Veranstalter angepasst.

Einige Unterkünfte haben unterschiedliche Zimmerarten mit flexibler oder festgelegter Belegung. Für jede Zimmerart, z.B. Studio, Appartment, Einzel- oder Doppelzimmer wird eine eigene Unterkunftsmatrix angelegt. In der Trefferliste wird lediglich eine Zimmerart angezeigt. Interessiert sich der Reisende für die Details des Hotels mit unterschiedlichen Zimmerarten, werden ihm dieser erst dann angezeigt. Zimmerarten, die die gewünschte Belegung nicht zulassen, entsprechen den Auswahlkriterien nicht und werden nicht berücksichtigt. Die Belegung kann auch bei der Berechnung des Transferpreises berücksichtigt werden. Wenn die Belegung eine bestimmte Personenzahl überschreitet, kann z.B. statt eines Taxis ein Kleinbus organisiert werden, so daß sich der Preis/Person verringert.

Bei dem beschriebenen Verfahren ist es möglich, daß ein Veranstalter die Flüge erst im Moment der Buchung von den Fluggesellschaften kauft. Dann liegt das Risiko eines Nicht-Verkaufs vollständig bei der Fluggesellschaft. Der Reisende hat für die gesamte gebuchte Reise jedoch einen einheitlichen Vertragspartner. Der Veranstalter kann Vorgaben machen, wie groß die jeweiligen Kontingente der Wiederverkäufer für Unterkünfte sein können. Die Add-Ons werden von dem Veranstalter produziert und organisiert.

Zur Eingabe der jeweiligen Daten des Veranstalters ist ein Eingabetool vorgesehen. Die Daten für die jeweiligen Angebote, d.h. für Unterkünfte, Zimmer, Aufschläge, etc. können über eine Eingabemaske eingegeben werden und liegen dann in einem geeigneten Format vor oder werden in dieses automatisch konvertiert. Auf übliche Weise können wiederkehrende Eingaben vorab gespeichert sein. Die Angebotsdaten werden dann wie oben beschrieben über eine geeignete Schnittstelle auf den Rechner/die Rechner übertragen, in dem die Datenbanken angelegt werden. Die Datenbanken werden täglich neu berechnet. Die Daten werden in Form einer Datenbank geliefert, die den Unterkunftspreis pro Tag angibt und den Gültigkeitszeitraum. Aus diesen Daten werden die Unterkunftsmatrizen erstellt, die dann ebenfalls in sortierter Form abgelegt werden.

## Patentansprüche

1. Verfahren zum Erstellen eines Pauschalreise-Datensatzes für eine verfügbare Pauschalreise auf der Basis von Rohdaten unterschiedlichen Formats und unterschiedlicher Gültigkeitszeiträume, **gekennzeichnet durch** die Schritte:
(a) Erstellen einer ersten Datenbank, in welcher eine Vielzahl von einer Unterkunft zugeordneten Datensätzen enthalten sind und jeder der Datensätze den zu Anreisetag und Reisedauer gehörigen Grundpreis für diese Unterkunft enthält und einen Wiederverkäufer-spezifischen Zeiger,
(b) Erstellen einer zweiten Datenbank, in welcher die zu den Anreisetagen und Anreisedauern gehörigen Flugpreise verfügbarer Flüge enthalten sind,
(c) Erstellen einer dritten Datenbank, in welcher Formeln zur Ermittlung eines Endpreises enthalten sind, wobei der Zeiger in dem Datensatz aus der ersten Datenbank auf eine Formel oder ein Formelpaket zeigt, welche zur Erstellung des Endpreises anzuwenden sind,
(d) Abfragen von Auswahlkriterien,
(e) Kombinieren von Anreisedatum und Reisedauern für Hotels aus der ersten Datenbank und Flüge aus der zweiten Datenbank zu verfügbaren Pauschalreisen unter Berücksichtigung der Auswahlkriterien,
(f) Erstellen eines Endpreises für die so ermittelten Pauschalreisen aus den in der ersten Datenbank enthaltenen Hotelpreisen und den in der zweiten Datenbank enthaltenen Flugpreisen unter Anwendung der in der dritten Datenbank enthaltenen Formeln.

2. Verfahren nach Anspruch 1, **dadurch gekennzeichnet, daß** die Datensätze der ersten Datenbank, Matrizen mit Zeilen und Spalten sind, jede der Matrizen einer Unterkunft zugeordnet ist, und der Eintrag in jedem Feld der Matrix den Grundpreis darstellt, der dem einer Spalte zugeordneten Anreisetag und der einer Zeile zugeordneten Reisedauer entspricht, wobei jede Matix ferner mit einem Header versehen ist, in dem eine Unterkunftsidentifikation und der Wiederverkäufer-spezifische Zeiger enthalten ist.

3. Verfahren nach Anspruch 2, **dadurch gekennzeichnet, daß** die zweite Datenbank eine Matrix mit Zeilen und Spalten ist, der Eintrag in jedem Feld der Matrix den Grundpreis darstellt, der dem einer Spalte zugeordneten Anreisetag und der einer Zeile zugeordneten Reisedauer entspricht und jede n-te Spalte und m-te Zeile jeweils der n-ten Spalte und m-ten Zeile in den Matrizen der ersten Datenbank entspricht.

4. Verfahren nach Anspruch 3, **dadurch gekennzeichnet, daß** die Kombination der Werte für Unterkünfte und Flüge durch Addieren der Grundpreise in den Feldern mit gleichen Koordinaten erfolgt, wobei nur solche Koordinaten berücksichtigt werden, die den Auswahlkriterien entsprechen.

5. Verfahren nach einem der vorgehenden Ansprüche, **dadurch gekennzeichnet, daß** die in der ersten und/oder zweiten Datenbank aufgeführten Grundpreise alle Formeln berücksichtigen, die für alle angebotenen Reisen gleich sind.

6. Vorrichtung zum Erstellen eines Pauschalreise-Datensatzes für eine verfügbare Pauschalreise auf der Basis von Rohdaten unterschiedlichen Formats und unterschiedlicher Gültigkeitszeiträume, **gekennzeichnet durch**:
(a) eine erste Datenbank, in welcher eine Vielzahl von einer Unterkunft zugeordneten Datensätzen enthalten sind, jeder der Datensätze den zu Anreisetag und Reisedauer gehörigen Grundpreis für diese Unterkunft und einen Wiederverkäufer-spezifischen Zeiger enthält,
(b) eine zweite Datenbank, in welcher die zu den Anreisetagen und Anreisedauern gehörigen Flugpreise verfügbarer Flüge enthalten sind;
(c) Mittel zum Eintragen von konvertierten Rohdaten in die erste und zweite Datenbank;
(d) eine dritte Datenbank, in welcher Formeln zur Ermittlung eines Endpreises enthalten sind, wobei der Zeiger in dem dem Datensatz aus der ersten Datenbank auf eine Formel oder ein Formelpaket zeigt, welche zur Erstellung des Endpreises anzuwenden sind,
(e) Eingabemittel zur Eingabe von Auswahlkriterien,
(f) Mittel zum Kombinieren und Auswählen von Anreisedaten und Reisedauern für Hotels aus der ersten Datenbank und Flüge aus der zweiten Datenbank zu verfügbaren Pauschalreisen,
(g) Mittel zum Erstellen eines Endpreises für die so ermittelten Pauschalreisen aus den in der ersten Datenbank enthaltenen Hotelpreisen und den in der zweiten Datenbank enthaltenen Flugpreisen unter Anwendung der in der dritten Datenbank enthaltenen Formeln.
